# DEMANDE DE BREVET EUROPEEN

(11) **EP 4 276 750 A1**
(43) Date de publication de la demande: **15.11.2023**
(21) Numéro de dépôt: 23173031.8
(22) Date de dépôt: 12.05.2023
(51) Int. Cl.: G06T 7/00, G06V 10/764

(54) **PROCÉDÉ ET DISPOSITIF DE TRAITEMENT D'IMAGE POUR LA LOCALISATION DE GOUTTES REPRÉSENTATIVES DE DÉFAUTS OU IRRÉGULARITÉS**

(30) Priorité: 13.05.2022 FR 2204557
(71) Demandeur: Commissariat à l'énergie atomique et aux énergies alternatives, 75015 Paris (FR)
(72) Inventeur: GUEDJ, Cyril, 38054 GRENOBLE CEDEX 9 (FR)
(74) Mandataire: Lavoix

(57) **Abrégé**

L'invention concerne un procédé et un dispositif de traitement d'image pour la localisation de gouttes représentatives de défauts ou irrégularités dans un échantillon, comportant une acquisition d'au moins une image de microscopie formant un pavé de données d'image d'entrée, la ou chaque image dudit pavé étant représentative d'une partie de l'échantillon. Le procédé comporte : un premier traitement (82) mettant en oeuvre un premier classifieur entraîné par apprentissage machine, pour obtenir une première cartographie spatiale des points de l'échantillon observé ; un deuxième traitement (84) comprenant une transformation (98) par une transformation en espace topologique discret, pour obtenir un pavé de données transformé, et une application (102) d'un deuxième classifieur entraîné par apprentissage machine pour obtenir une deuxième cartographie spatiale de l'échantillon observé ; ensuite une combinaison (106) des première et deuxième cartographies pour obtenir une cartographie finale avec localisation de défauts ou irrégularités dans l'échantillon observé.

## Description

La présente invention concerne un procédé et un dispositif de traitement d'image pour la localisation de gouttes représentatives de défauts ou irrégularités dans un échantillon observé.

L'invention se situe dans le domaine du traitement d'images de microscopie, obtenues par observation d'échantillons de matériaux ou dispositifs physiques, pour l'analyse de propriétés physiques de leurs structures.

Plus particulièrement, l'invention trouve des applications dans la localisation de défauts ou irrégularités observées dans des matériaux cristallins, par exemple appliquée dans l'inspection de qualité dans une chaîne de production.

L'analyse de propriétés physiques de matériaux par traitement de données d'images obtenues par microscopie est un domaine technique connu. Les images sont par exemple obtenues par microscopie électronique en transmission à haute résolution, microscopie de fluorescence, microscopie à force atomique, microscopie à effet tunnel ou tomographie électronique par exemple. Les images de microscopie obtenues sont des images à résolution atomique, c'est-à-dire de résolution spatiale inférieure ou égale à 2 nanomètres.

Des ensembles de données d'images représentatives chacune d'au moins une partie de l'échantillon observé sont obtenues par microscopie, formant un pavé de données d'images à N dimensions, N étant un entier supérieur ou égal à 2, également appelé « datacube ». Ce pavé comporte des gouttes, également appelées taches ou spots, ou « spikes » ou « blobs » en anglais, qui se détachent sur un fond homogène (par exemple des gouttes ou taches claires sur fond homogène sombre). Ces gouttes sont représentatives de caractéristiques structurelles du matériau de l'échantillon observé. Par exemple, s'agissant de l'observation de cristaux, des gouttes disposées selon motif régulier (e.g. périodique) représentent le maillage cristallin régulier. En deux dimensions, les gouttes sont également appelées taches. En une dimension, les gouttes sont des points.

Mathématiquement, une goutte est une composante simplement connexe d'un espace topologique discret, au sens de la topologie générale. Cela signifie que tout lacet tracé dans une goutte peut être réduit par homotopie à un point. Physiquement, une goutte représente par exemple le signal électrique produit par les pixels d'un détecteur matriciel suite à l'impact d'une particule (électron, photon, ion, fermions, boson, etc.). La particule est toujours beaucoup plus petite que le pixel, donc la goutte peut toujours se réduire à un point par homotopie.

Une difficulté particulière est l'observation et la localisation de gouttes représentatives de défauts dans les cristaux, ces défauts étant de taille plus petite que les gouttes représentatives du maillage régulier qui forment un réseau périodique par définition du cristal. De tels défauts sont par exemple les lacunes ou atomes interstitiels, éventuellement chargés, qui sont particulièrement difficiles à observer, et généralement noyés dans un bruit. Les défauts n'ont pas nécessairement de structure périodique.

Le brevet US 10,727,025 B2 décrit une méthode pour analyser des défauts dans les cristaux, consistant à comparer des images acquises par microscopie, par exemple par microscopie électronique en transmission, TEM (pour « Transmission Electron Microscopy » en anglais), et des images virtuelles tridimensionnelles simulées. Une telle méthode ne s'applique par pour distinguer et localiser des défauts de très petite taille comme les lacunes ou les atomes interstitiels noyés dans le bruit. Actuellement, seuls quelques rares cas particuliers particulièrement bien visibles peuvent être analysés par cette méthode classique.

Le brevet US2021/0319546 A1 décrit une méthode de classification automatisée de défauts dans des images de résolution inférieure à un micron, utilisant simultanément deux sources d'images, par exemple des images obtenues par spectroscopie EDS (pour « Energy Dispersive Spectroscopy ») et des images obtenues par microscopie électronique TEM. L'acquisition simultanée d'images d'un même échantillon observé par deux sources différentes est contraignante et coûteuse. De plus, la méthode proposée dans ce brevet n'est pas adaptée pour la détection et la localisation des plus petits défauts tels que les lacunes ou les atomes interstitiels.

De manière générale, les méthodes connues ne permettent pas de détecter les défauts ponctuels, éventuellement chargés électriquement.

L'invention a pour objectif de remédier aux inconvénients de l'état de la technique en proposant un procédé pour la localisation de défauts ou irrégularités dans un échantillon observé, permettant de réaliser une cartographie des plus petits défauts tels que les défauts ponctuels, éventuellement chargés électriquement.

A cet effet, l'invention propose, selon un aspect, un procédé de traitement d'image pour la localisation de gouttes représentatives de défauts ou irrégularités dans un échantillon, comportant une acquisition d'au moins une image de microscopie formant un pavé de données d'image d'entrée, la ou chaque image dudit pavé étant représentative d'une partie de l'échantillon. Ce procédé comporte:
- un premier traitement du pavé de données d'image d'entrée mettant en oeuvre un premier classifieur entraîné par apprentissage machine, appliqué audit pavé de données d'image d'entrée pour obtenir une première cartographie spatiale des points de l'échantillon observé, chaque point de ladite première cartographie étant classifié dans une classe parmi un nombre prédéterminé de premières classes comprenant au moins une classe représentative d'un fond d'image, une classe représentative de motifs réguliers de référence et/ou une classe représentative d'un type de défaut ou irrégularité ;
- un deuxième traitement du pavé de données d'image d'entrée comprenant :
   - une transformation du pavé de données d'image d'entrée par une transformation en espace topologique discret, pour obtenir un pavé de données transformé, ladite transformation en espace topologique discret étant une transformation modifiant une signature spectrale des défauts ou irrégularités, ladite transformation en espace topologique discret étant soit une transformation dite gommante, l'application d'une transformation gommante ayant pour effet de réduire ladite signature spectrale des défauts ou irrégularités, soit une transformation dite exacerbante, l'application d'une transformation exacerbante ayant pour effet de magnifier ladite signature spectrale des défauts ou irrégularités,
   - une application d'un deuxième classifieur entraîné par apprentissage machine, appliqué au pavé de données transformé pour obtenir une deuxième cartographie spatiale de l'échantillon observé, chaque point de ladite deuxième cartographie étant classifié dans une classe parmi un nombre prédéterminé de deuxièmes classes comprenant au moins une classe représentative d'un fond d'image, une classe représentative de motifs réguliers et/ou une classe représentative d'un type de défaut ou irrégularité ;
- une combinaison des première et deuxième cartographies spatiales pour obtenir une cartographie finale avec localisation de défauts ou irrégularités dans l'échantillon observé.

Avantageusement, l'application de deux traitements au pavé de données d'image d'entrée, un des traitements mettant en oeuvre une transformation en espace topologique discret permettant d'améliorer la localisation de gouttes représentatives de défauts ou irrégularités de l'échantillon observé.

Le procédé de traitement d'image selon l'invention peut également présenter une ou plusieurs des caractéristiques ci-dessous, prises indépendamment ou selon toutes les combinaisons techniquement envisageables.

Il comporte une projection du pavé de données d'image d'entrée pour obtenir un sous-pavé de dimension inférieure comportant une matrice de pixels, chaque pixel ayant une valeur numérique associée.

Le premier traitement comporte en outre l'application d'un premier traitement de super-résolution.

Le premier traitement comporte en outre un post-traitement de la première cartographie spatiale.

Le deuxième traitement comporte en outre l'application d'un deuxième traitement de super-résolution appliqué au pavé de données d'image d'entrée et/ou un troisième traitement de super-résolution appliqué au pavé de données transformé avant application du deuxième classifieur.

Le deuxième traitement comporte en outre l'application d'un post-traitement appliqué à la deuxième cartographie après application du deuxième classifieur.

Le premier traitement comporte en outre l'application d'une transformation en espace topologique discret, gommante ou exacerbante, du pavé de données d'entrée, avant l'application du premier classifieur.

Le procédé comporte une étape préalable de détermination automatisée d'au moins une transformation gommante et/ou d'au moins une transformation exacerbante, mettant en oeuvre, pour un type de défaut donné, pour un ensemble de transformations à tester, appliquées sur des images théoriques présentant chacune au moins un défaut dudit type de défaut :
- un calcul de diffractogramme superrésolu de l'image théorique et une détermination d'une signature spectrale dudit type de défaut à partir du diffractogramme superrésolu d'image théorique,
- une application d'une transformation à tester sur l'image théorique pour obtenir une image transformée, et calcul d'un diffractogramme superrésolu de l'image transformée,
- une comparaison du diffractogramme superrésolu de l'image théorique et du diffractogramme superrésolu de l'image transformée, pour déterminer si ladite signature spectrale dudit type de défaut est modifiée.

La transformation en espace topologique discret est une transformation gommante comportant des sous-étapes de :
- application d'une transformation de Fourier au pavé de données d'image d'entrée,
- masquage sélectif appliqué au résultat de la transformation de Fourier,
- application d'une transformation de Fourier inverse pour obtenir le pavé de données d'image transformé.

Le masquage sélectif met en oeuvre un seuillage, consistant à mettre à zéro les valeurs du pavé de données transformé inférieures à une première valeur de seuil, ladite première valeur de seuil étant choisie en fonction d'un pave de données simulé exempt de défaut.

La première cartographie est obtenue après application d'une transformation gommante et ladite deuxième cartographie est obtenue après application d'une transformation exacerbante, ou ladite première cartographie est obtenue après application d'une transformation exacerbante et ladite deuxième cartographie est obtenue après application d'une transformation gommante, et la combinaison met en oeuvre une soustraction entre lesdites première et deuxième cartographies.

La transformation en espace topologique discret du pavé de données d'image d'entrée est une transformation exacerbante comportant des sous-étapes de:
- calcul d'une transformation à base de distances, associant à chaque point du pavé de données transformé une valeur représentative d'une plus petite distance, selon une métrique prédéterminée, entre ledit point et un point appartenant à une goutte,
- seuillage du résultat de ladite transformation à base de distances pour obtenir un pavé binaire de données transformé.

La combinaison met en oeuvre une intersection des première et deuxième cartographies.

La combinaison met en oeuvre un apprentissage machine.

Le procédé est mis en oeuvre par un processeur d'un dispositif de calcul.

Selon un autre aspect, l'invention un dispositif de traitement d'image pour la localisation de gouttes représentatives de défauts ou irrégularités dans un échantillon, comportant une acquisition d'au moins une image de microscopie formant un pavé de données d'image d'entrée, la ou chaque image dudit pavé étant représentative d'une partie de l'échantillon. Ce dispositif comporte un processeur configuré pour exécuter:
- un module de premier traitement du pavé de données d'image d'entrée mettant en oeuvre un premier classifieur entraîné par apprentissage machine, appliqué audit pavé de données d'image d'entrée pour obtenir une première cartographie spatiale des points de l'échantillon observé, chaque point de ladite première cartographie étant classifié dans une classe parmi un nombre prédéterminé de premières classes comprenant au moins une classe représentative d'un fond d'image, une classe représentative de motifs réguliers de référence et/ou une classe représentative d'un type de défaut ou irrégularité ;
- un module deuxième traitement du pavé de données d'image d'entrée comprenant :
   - un sous-module module de transformation du pavé de données d'image d'entrée par une transformation en espace topologique discret, pour obtenir un pavé de données transformé, ladite transformation en espace topologique discret étant une transformation modifiant une signature spectrale des défauts ou irrégularités, ladite transformation en espace topologique discret étant soit une transformation dite gommante, l'application d'une transformation gommante ayant pour effet de réduire ladite signature spectrale des défauts ou irrégularités, soit une transformation dite exacerbante, l'application d'une transformation exacerbante ayant pour effet de magnifier ladite signature spectrale des défauts ou irrégularités,

   - un sous-module d'application d'un deuxième classifieur entraîné par apprentissage machine, appliqué au pavé de données transformé pour obtenir une deuxième cartographie spatiale de l'échantillon observé, chaque point de ladite deuxième cartographie étant classifié dans une classe parmi un nombre prédéterminé de deuxièmes classes comprenant au moins une classe représentative d'un fond d'image, une classe représentative de motifs réguliers et/ou une classe représentative d'un type de défaut ou irrégularité ;
- un module de combinaison des première et deuxième cartographies spatiales pour obtenir une cartographie finale avec localisation de défauts ou irrégularités dans l'échantillon observé.

Selon un autre aspect, l'invention concerne un programme d'ordinateur comportant des instructions logicielles qui, lorsqu'elles sont exécutées par un dispositif électronique programmable, mettent en oeuvre un procédé de traitement d'image tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est un schéma-bloc d'un système d'inspection d'images comportant un dispositif de traitement d'images selon un mode de réalisation de l'invention ;
[Fig 2] la figure 2 illustre une image de microscopie à fond sombre (HRSTEM-HAADF) ;
[Fig 3] la figure 3 est une première cartographie associée à l'image de la figure 2 ;
[Fig 4] la figure 4 représente le résultat de l'application d'une transformation en espace topologique discret mettant en oeuvre une transformation gommante à l'image de la figure 2 selon un premier mode de réalisation ;
[Fig 5] la figure 5 représente le résultat de l'application d'une transformation en espace topologique discret mettant en oeuvre une transformation exacerbante à l'image de la figure 2 ;
[Fig 6] la figure 6 représente une image obtenue par seuillage à partir de l'image de la figure 5 ;
[Fig 7] la figure 7 est une deuxième cartographie obtenue à partir de l'image de la figure 6 ;
[Fig 8] la figure 8 illustre une cartographie finale et la localisation de défauts ou irrégularités correspondants à l'image de la figure 2, et
[Fig 9] la figure 9 est un synoptique d'un procédé de traitement d'image pour la localisation de gouttes représentatives de défauts ou d'irrégularités selon un mode de réalisation.

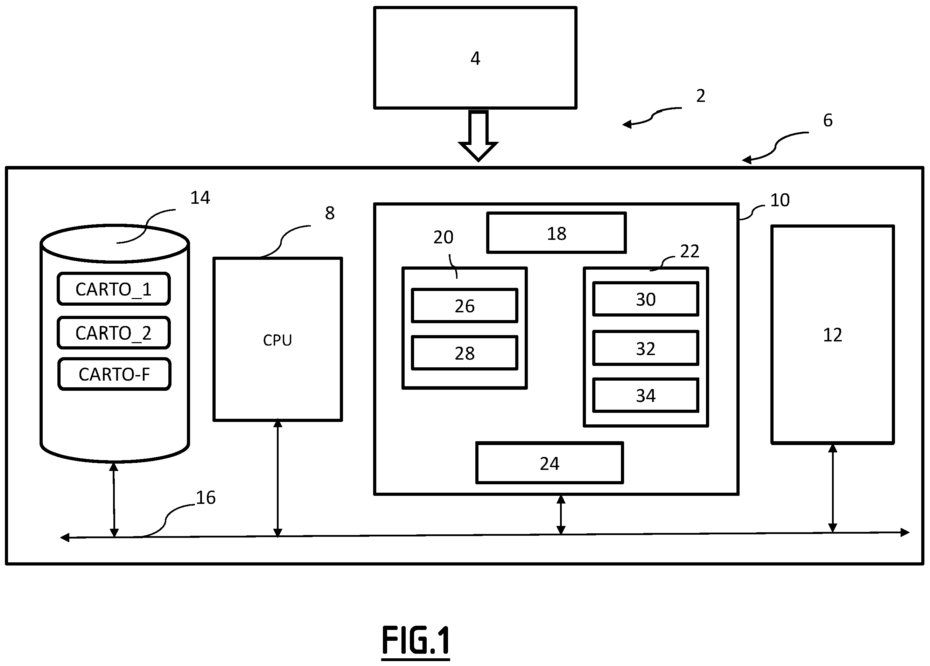

La figure 1 illustre schématiquement un système 2 d'inspection de pavé de données d'images, les données d'images étant acquises par un microscope électronique 4.

Dans un mode de réalisation, le microscope électronique 4 est un microscope électronique en transmission (TEM) qui permet d'acquérir des images d'un échantillon d'une structure physique (matériau ou dispositif) observé. Par exemple, la structure physique observée comporte des cristaux.

Le microscope électronique 4 permet d'acquérir simultanément des images de diffraction électronique, des spectres EELS (pour « Electron Energy Loss Spectroscopy »), des spectres EDX (pour « Energy Dispersive X-Ray Analysis ») des signaux de différents capteurs (BF pour « Bright field », DF pour « Dark field », DPC pour « Differential phase contrast » ou tout autre capteur adapté), pour chaque point de l'échantillon en mode de microscopie à balayage appelé mode STEM (pour « Scanning Transmission Electron Microscope »). Un autre mode d'acquisition possible est le mode TEM qui permet d'obtenir une image globale sans avoir à balayer le faisceau d'électrons.

Chaque image acquise est représentée sous forme d'image numérique, comportant des points ou pixels, chaque image étant représentative d'au moins une partie de l'échantillon observé.

En mode STEM, il est possible d'acquérir, pour chaque point de l'échantillon, une image de diffraction électronique, un spectre EELS, un spectre EDX, une image d'un détecteurad hoc, un signal d'un détecteur X, etc. En balayant tout l'échantillon, avec le faisceau d'électrons, l'ensemble des signaux mesuré par les détecteurs permet d'engendrer de nouvelles images. L'ensemble de toutes ces images est classiquement appelé le « datacube » de données mesurées.

Ainsi, pour chaque point d'un échantillon observé, plusieurs valeurs associées sont obtenues, formant ainsi un pavé de données d'images, à N dimensions, N étant un entier supérieur ou égal à deux, également appelé « datacube » de données mesurées.

De plus, dans un mode de réalisation, plusieurs images sont acquises dans le temps, montrant une évolution de l'échantillon lors de l'analyse. Dans ce mode de réalisation, le temps est une dimension supplémentaire du pavé de données.

En complément, une autre dimension du pavé de données est la focalisation du microscope, l'énergie des électrons, un angle (de l'échantillon, de collection des électrons, de convergence de électrons), ou tout autre paramètre de réglage du microscope susceptible de varier durant la mesure.

Les données incomplètes peuvent éventuellement être extrapolées à partir des valeurs voisines le cas échéant.

Lorsque le microscope électronique 4 comprend un détecteur en champ clair, ou BF (pour Bright Field en anglais), une image STEM-BF est obtenue.

Lorsque le microscope électronique 4 comprend un détecteur en champ sombre, ou DF (pour Dark Field en anglais), une image STEM-DF est obtenue.

De préférence, le mode ABF (pour « Annular Bright Field ») est utilisé pour obtenir une image HRSTEM-ABF, qui permet d'observer des défauts cristallins, ces défauts modifiant le diffractogramme.

Selon une variante, le mode d'acquisition est de type HRTEM (« *High-resolution transmission électron microscopy* ») éventuellement filtré en énergie (EF-HRTEM ou EFTEM).

Une autre variante d'acquisition est données d'imagerie par le brevet FR3090876B1 qui repose sur la construction d'un détecteur virtuel adapté pour l'espèce à cartographier.

Dans un pavé de données d'image d'un échantillon de structure cristalline, la maille de cristal forme un réseau périodique de gouttes observables disposées selon motif régulier qui représente le maillage cristallin régulier.

Les défauts structurels ou irrégularités d'une telle structure forment des gouttes également, mais qui sont par exemple irrégulièrement disposées, et parfois plus petites que les gouttes appartenant au motif régulier du cristal.

Comme déjà indiqué ci-dessus, mathématiquement, une goutte est une composante simplement connexe d'un espace topologique discret, au sens de la topologie générale. Les valeurs des pixels appartenant à une goutte se distinguent d'un fond d'image.

Un pavé de données d'image d'un échantillon d'une structure physique observée est transmis à un dispositif 6 de traitement d'image pour la localisation de gouttes représentatives de défauts ou irrégularités de l'échantillon observé.

Par exemple, la transmission est effectuée par une liaison filaire ou par liaison sans fil (optique, radio, ou autre).

Le dispositif 6 de traitement est, dans un mode de réalisation, un dispositif électronique programmable, e.g. un ordinateur.

Le dispositif 6 comporte un processeur 8 associé à une mémoire électronique 10. Optionnellement, le dispositif 6 comporte une interface homme-machine 12, comportant notamment un écran d'affichage de données. En outre le dispositif 6 comporte ou est connecté à une mémoire de stockage 14. Les éléments 8, 10, 12, 14 du dispositif 6 sont adaptés pour communiquer via un bus de communication 16.

Le processeur 8 est configuré pour exécuter des modules 18, 20, 22, 24, mémorisés dans la mémoire électronique 10, pour mettre en oeuvre un procédé de traitement d'image selon l'invention.

Le module 18 est un module d'obtention de pavé de données d'image à traiter, configuré pour obtenir un pavé de données d'image comportant au moins une image d'entrée à partir d'une image obtenue par microscopie, dite image de microscopie.

Par exemple, le module 18 obtient le pave de données d'image à traiter (ou pavé de données d'image d'entrée) à partir d'une mémoire électronique, où ces données ont été mémorisées après acquisition.

Le module 20 est un module de premier traitement du pavé de données d'image d'entrée, et il comporte un sous-module 26 de classification, configuré pour mettre en oeuvre un premier classifieur entraîné par apprentissage machine, adapté à obtenir une première cartographie CARTO_1.

La première cartographie est une cartographie spatiale, représentée en deux dimensions ou plus, ses points correspondant aux points de l'échantillon observé.

Chaque point de la première cartographie est classé parmi des premières classes comprenant au moins une classe représentative du fond d'image, une classe représentative d'un motif régulier et/ou une classe représentative d'un défaut ou d'une irrégularité de l'échantillon observé.

Le module 20 comporte en outre un module optionnel 28 de traitement complémentaire, plusieurs traitements complémentaires tels qu'une projection dans un sous-espace de dimension inférieure, un traitement de superrésolution, ou un traitement de débruitage, ces divers traitements pouvant être optionnellement mis en oeuvre.

Le module 22 est un module de deuxième traitement du pavé de données d'image d'entrée, et il comporte :
- un sous-module 30 d'application d'une transformation en espace topologique discret, permettant d'obtenir un pavé de données transformé,
- un sous-module 32 de classification, configuré pour mettre en oeuvre un deuxième classifieur entraîné par apprentissage machine, adapté à obtenir une deuxième cartographie de l'échantillon CARTO_2.

Chaque point de la deuxième cartographie est classé parmi des premières classes comprenant au moins une classe représentative du fond d'image, et une classe représentative d'un motif régulier observé et/ou une classe représentative d'un défaut ou d'une irrégularité de l'échantillon observé.

Une transformation en espace topologique discret est une transformation qui transforme un pavé de données d'images représenté dans un espace N-dimensionnel en un pavé transformé de données d'images dans un espace M dimensionnel. Les dimensions N et M sont des nombres entiers.

Dans un mode de réalisation, la transformation en espace topologique est une transformation surjective.

Les transformations en espace topologique discret applicables sont des transformations qui peuvent modifier la signature spectrale du défaut, et sont soit des transformations dites « gommantes » de défauts ou irrégularités, soit des transformations dites « exacerbantes » de défauts ou irrégularités. Par définition, les transformations gommantes réduisent l'intensité du signal provenant des défauts, alors que les transformations exacerbantes le conservent ou l'amplifient.

Dans un mode de réalisation, pour chaque type de matériaux observés, par exemple les matériaux cristallins, on connaît plusieurs types de défauts, comme par exemple les lacunes ou atomes interstitiels.

Chaque type de défaut a une signature spectrale particulière, observable sur le diffractogramme superrésolu de l'image, obtenu par exemple selon la méthode décrite dans la demande de brevet française déposée sous le numéro FR 2013933.

On appelle signature spectrale une caractéristique calculée dans l'espace de représentation dit spectral, la représentation spectrale des données d'image étant obtenue par application d'une transformation de Fourier.

Un même type de défaut a une même signature spectrale, indépendamment de sa position spatiale dans un échantillon observé.

Pour des classes de matériaux connues et des types de défauts connus, il est possible de simuler des images d'échantillons théoriques (ou idéales), ce qui permet de calculer la signature spectrale de chaque type de défaut.

Les transformations en espace topologique discret sont séparables en 2 classes : celles qui réduisent la signature spectrale du défaut (gommantes), et celles qui l'amplifient ou qui n'ont pas d'impact significatif sur la signature spectrale du défaut (exacerbantes) .

La présente invention met en oeuvre les transformations gommantes et exacerbantes.

Dans un mode de réalisation, une ou plusieurs transformations gommantes et une ou plusieurs transformations exacerbantes sont préalablement déterminées, et mémorisées.

Pour déterminer à quelle classe parmi les classes mentionnées ci-dessus appartient une transformation en espace topologique discret, selon un mode de réalisation, il convient de calculer le diffractogramme superrésolu d'une image ou d'un pavé d'images théorique (e.g. simulé), transformé par ladite transformation, et de le comparer avec le diffractogramme superrésolu de l'image ou du pavé d'images simulé brut (i.e. avant application de ladite transformation), pour vérifier si et comment la signature spectrale du défaut est impactée par cette transformation.

Cette vérification exploratoire peut être réalisée de manière automatisée pour explorer une arborescence de combinaisons mathématiques, sur un ensemble de transformations à tester ou à combiner entre elles, appliquées sur des images théoriques (images de synthèse).

Ainsi, il est possible de déterminer un ensemble de transformations en espace topologique discret gommantes de défauts, appelées simplement transformations gommantes ci-après, un ensemble de transformations en espace topologique discret exacerbantes de défauts, appelées simplement transformations exacerbantes ci-après.

Des exemples de transformation gommante et de transformation exacerbante seront décrits ci-après.

Le module 22 comporte en outre un module optionnel 34 de traitement complémentaire, plusieurs traitements complémentaires tels qu'un traitement de super-résolution, de seuillage ou un traitement de débruitage pouvant être optionnellement mis en oeuvre.

Le module 24 est un module de combinaison des première et deuxième cartographies, configuré pour localiser des défauts/irrégularité de l'échantillon observé à partir de ces cartographies dans une cartographie finale CARTO_F, mémorisée dans la mémoire 14.

La combinaison est par exemple une ségrégation de gouttes ou taches représentatives de défauts ou irrégularités.

Selon une variante, la combinaison met en oeuvre un apprentissage machine.

Dans un mode de réalisation, les modules 18, 20, 22, 24 sont réalisés chacun sous forme d'un logiciel, et forment un programme d'ordinateur.

En variante non représentée, les modules 18, 20, 22, 24 sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphies processing*), ou encore sous forme d'un circuit intégré dédié, tel qu'un ASIC (de l'anglais *Application Spécifie Integrated Circuit*).

Le logiciel de traitement d'image est en outre apte à être enregistré, sous forme de programme d'ordinateur comportant des instructions logicielles, sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

Avantageusement, le deuxième traitement mis en oeuvre par le module 22 permet d'élargir l'espace de représentation des données d'image initiales, les défauts ou irrégularités étant magnifiés (transformations exacerbantes) ou réduits, voire effacés (transformations gommantes) selon le mode de réalisation.

Dans chacun des cas cela permet grâce à la combinaison des deux cartographies, une localisation spatiale plus précise des défauts ou irrégularités de l'échantillon observé.

L'invention s'applique dans le cas général pour un pavé de données d'image à N dimensions, N étant un entier supérieur ou égal à 2.

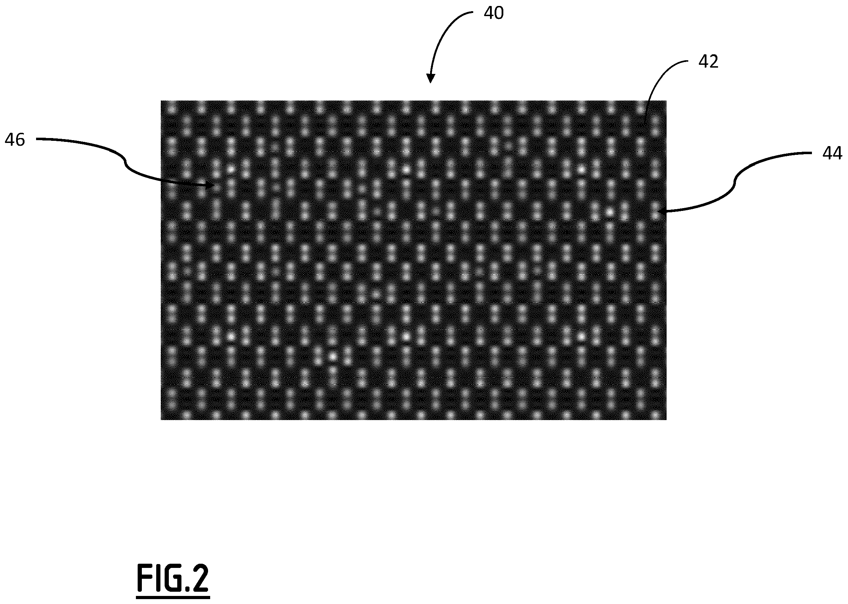

A des fins d'illustration, les figures 2 à 8 illustrent le cas du traitement un pavé formé d'une image bidimensionnelle (N=2).

La **figure 2** illustre une image bidimensionnelle 40 de type HRSTEM-HAADF (pour « High Resolution STEM »-« High Angle Dark-Annular Field »), comportant un fond d'image noir 42, et des gouttes claires représentatives d'une part du motif régulier 44 et représentatives de défauts ou irrégularités 46.

L'image 40 représentée à la figure 2 est une image de synthèse non bruitée. En pratique, un bruit additionnel est présent, ce qui rend les gouttes 46 représentatives de défauts ou d'irrégularités d'autant moins visibles et difficiles à détecter et à localiser.

L'image 40 de la figure 2 est une image de synthèse qui correspond à l'observation du silicium qui présente des défauts interstitiels 46 insérés dans la maille périodique 44 de la structure cristalline. Par exemple l'image 40 représente du silicium orienté [110].

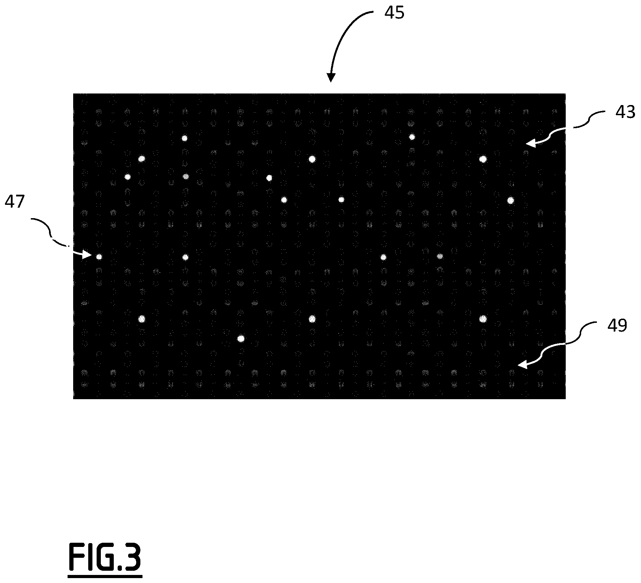

La **figure 3** illustre une première cartographie 45 correspondant à l'image 40 de la figure 2, comprenant les points 43 associés à la classe « fond d'image » (points noirs), les points blancs 47 correspondant aux défauts structurels et des points 44 gris correspondant aux motifs réguliers, qui sont dans cet exemple des couples de gouttes régulièrement réparties dans l'image 40.

Par exemple, la première cartographie 45 est obtenue par application d'un premier classifieur préalablement entraîné avec des images de synthèse par exemple, en utilisant une large palette de variantes d'images de structures cristallines comprenant des défauts interstitiels. Par exemple, le premier classifieur est entraîné pour classifier les points en trois classes qui sont respectivement : le fond, les motifs réguliers, qui sont périodiques, (taches ou spots du cristal) et les défauts ou irrégularités, ici les taches représentant des défauts interstitiels.

Pour l'apprentissage supervisé, des pixels du pavé de données à analyser sont labillisés par un homme du métier comme appartenant à chacune des classes mentionnées ci-dessus. Dans une autre alternative, le pavé de données d'apprentissage est généré par synthèse, donc la localisation des défauts est par définition connue. Par exemple, l'apprentissage machine est effectué avec un algorithme de type forêt aléatoire rapide « fast random forest », décrit dans l'article de Léo Breiman (2001). « Random Forests », publié dans Machine Learning. 45(1):5-32).

En variante, d'autres algorithmes de classification par apprentissage machine peuvent être mis en oeuvre, par exemple de type Bayesien, ou à base de fonctions, ou à base de règles, ou une combinaison de tels algorithmes, ou à base de toute la palette d'outils utilisés en classification par apprentissage machine.

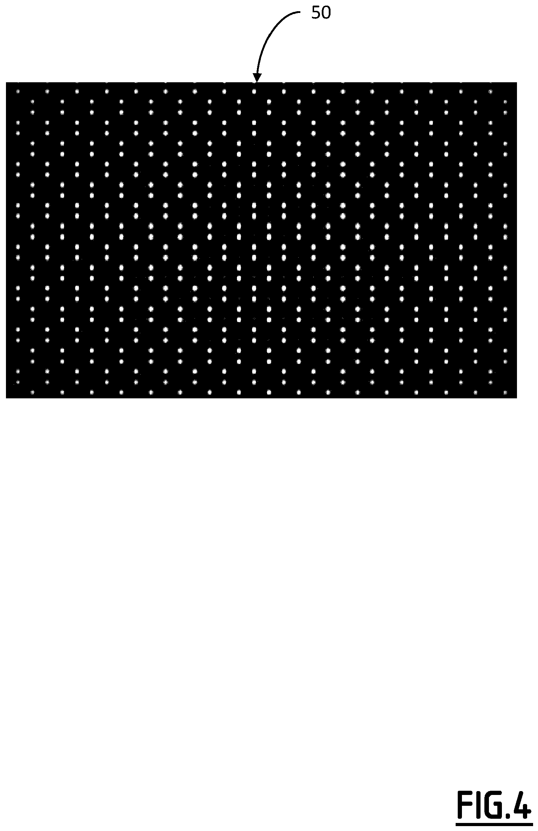

La **figure 4** illustre le résultat d'une transformation gommante appliquée à l'image 40 de la figure 2.

Comme on peut l'observer sur la figure 4, l'image transformée 50 représentée à la figure 4 comporte uniquement des gouttes représentatives de la maille régulière périodique du silicium. Ainsi, l'image transformée 50 obtenue constitue ici la référence d'une image sans défaut.

L'image transformée 50 est obtenue, dans cet exemple, par application d'une transformée de Fourier, d'un masquage sélectif (fenêtrage fréquentiel qui ne conserve que les gouttes du diffractogramme théorique du silicium orienté [110]) et d'une transformée de Fourier inverse, suivi d'une normalisation et d'une binarisation.

La transformée de Fourier est une transformation connue dans le domaine du traitement d'images. Lorsque l'image d'entrée est une image à deux dimensions (2D) de LxW points (ou pixels), représentée dans un premier domaine dit domaine spatial, chaque point ayant une valeur numérique associée, par exemple codée sur un nombre 2^{P} de niveaux de gris, une transformée de Fourier transforme l'image d'entrée en une image transformée de LxW points dans un deuxième domaine dit domaine spectral, chaque point ayant une valeur associée égale au spectre de Fourier en ce point.

La transformée de Fourier inverse permet de passer du deuxième domaine spectral au premier domaine spatial.

Dans cet exemple, la transformation appliquée est une transformation dans un domaine dual au domaine de départ.

Le masquage consiste par exemple à une mise à zéro des zones qui se trouvent dans la signature spectrale du défaut recherché, afin de le gommer.

Le seuillage consiste par exemple à mettre à zéro toutes les valeurs numériques de pixels inférieures ou égales à une première valeur de seuil V_{S1}. La première valeur de seuil est par exemple choisie en fonction de l'image théorique simulée pour un matériau exempt du défaut.

Ce seuillage peut être éventuellement localisé, c'est-à-dire que la première valeur de seuil va varier localement, ou réalisé à partir de la large palette de méthodes de seuillage éventuellement adaptatifs publiées dans la littérature.

Ainsi, grâce au traitement appliqué, l'image transformée 50 contient uniquement le fond sombre et les motifs réguliers, les points correspondant aux défauts interstitiels ayant été éliminés.

Selon un autre mode de réalisation, une transformation en espace topologique discret appliquée est une transformation 8SSEDT, décrite dans l'article « Fast raster scan distance propagation on the discrète rectangular lattice » de F. Leymarie et M.D. Levine, publiée dans le volume 55 de janvier 1992 de CVIP : Image Understanding, suivi d'une inversion de contrastes. Cette transformée applique une distance euclidienne, un point donné dans l'espace transformé étant représentatif de la distance euclidienne minimale entre ce point donné et un point d'une catégorie donnée, par exemple un point « blanc » représentatif de la structure cristalline ou d'un défaut structurel interstitiel dans l'exemple considéré.

La transformation 8SSEDT est une transformée exacerbante.

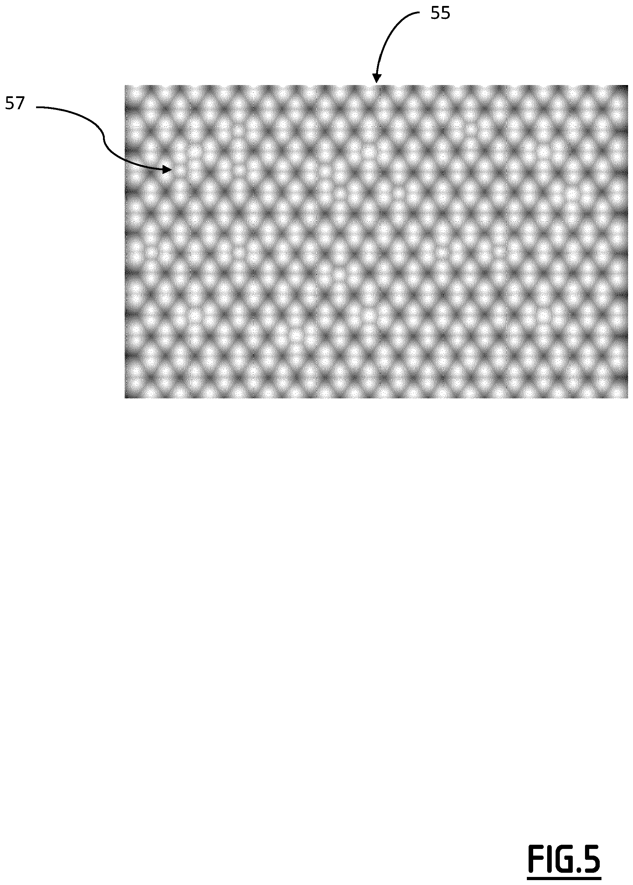

Un exemple d'image 55 obtenue par une telle transformation appliquée à l'image 40 de la figure 2 est illustrée à la **figure 5****.**

Dans la représentation de la figure 5, plus la distance euclidienne entre un point de l'image et la goutte voisine la plus proche est faible, plus la valeur associée au point est élevée (point sombre après inversion de contraste).

Ainsi, les zones 57 dans lesquelles il y a des défauts interstitiels en plus des motifs réguliers de structure sont des zones à niveau de contraste intermédiaire entre les gouttes les plus proches et les gouttes les plus éloignées présents dans le cas du cristal parfait.

Ces zones de contraste intermédiaire révèlent donc la présence des défauts situés à une distance différente des plus proches voisins naturellement présents dans le cristal exempt de défaut.

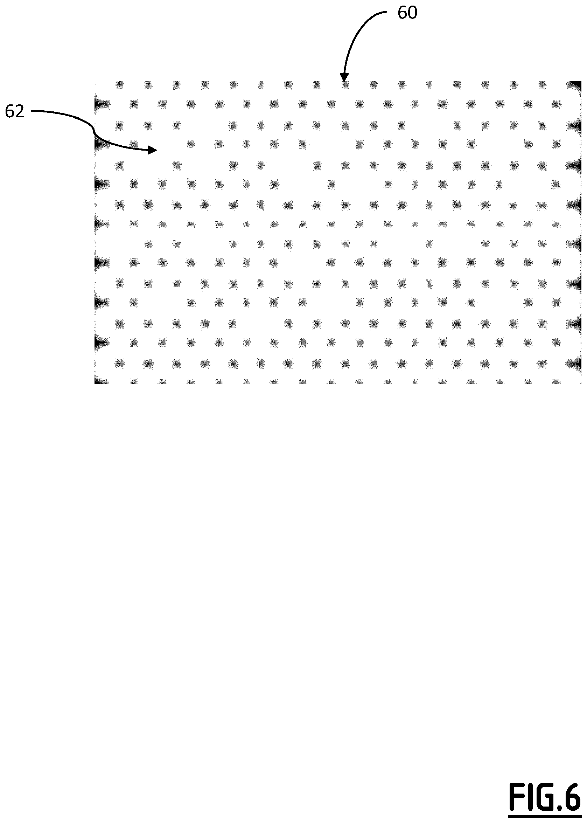

La **figure 6** illustre une image 60 seuillée obtenue par seuillage de l'image 55 de la figure 5. L'opération de seuillage appliquée consiste par exemple à mettre à une valeur haute prédéterminée tous les points de l'image transformée 55 dont la valeur est supérieure ou égale à une deuxième valeur de seuil V_{S2}. La deuxième valeur de seuil V_{S2} est par exemple choisie pour obtenir une fraction de pixels noirs de l'ordre de 5 % après seuillage.

L'image 60 obtenue après transformation 8SSEDT et seuillage comprend des zones « blanches » 62 de plus grande surface correspondant aux zones contenant des défauts interstitiels.

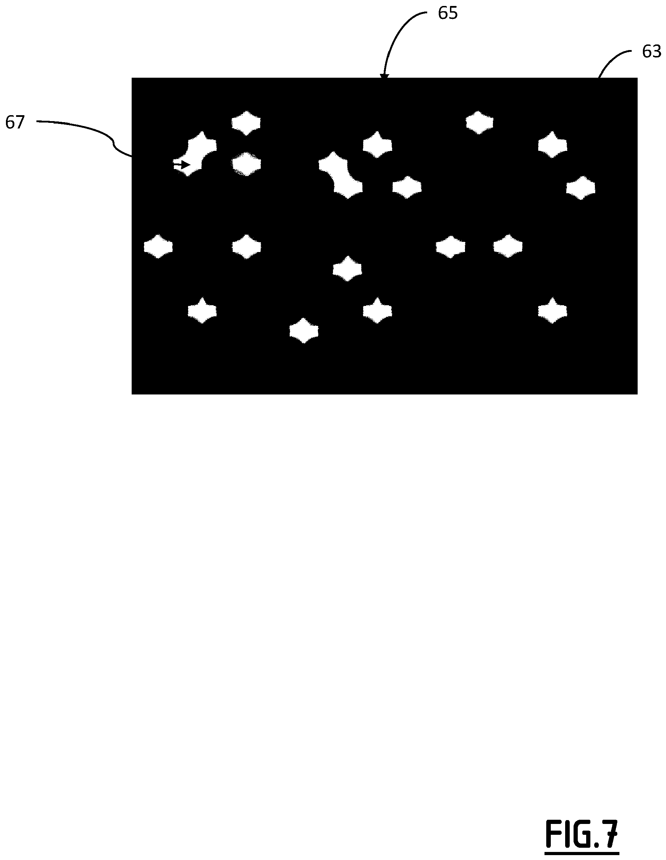

La **figure 7** illustre une deuxième cartographie 65 correspondant à l'image 60 de la figure 6, comprenant les points 63 associés à la classe « fond d'image » regroupés avec des points appartenant aux motifs réguliers (points sombres), les points clairs 67 correspondant aux défauts. Les zones claires regroupant des points 67 se détachent de manière nette.

Par exemple, la première cartographie 65 est obtenue par application d'un deuxième classifieur préalablement entraîné de manière supervisée sur 2 régions de l'image labellisées comme « défaut » et présentes dans l'image. Cette méthodologie présente l'avantage d'être particulièrement rapide et « frugale » : elle permet d'aboutir au résultat avec une consommation d'énergie minimale en réalisant l'apprentissage directement sur une partie de l'image à analyser. Une variante d'apprentissage machine consiste à utiliser un ensemble de cas connus et labellisés par l'homme du métier.

La figure 7 représente la probabilité de présence de la classe « défaut » : les zones regroupant les points 67 sont des zones de probabilité de défaut élevée, et les zones comprenant les points 63 sont des zones de probabilité de défaut faible (ou nulle), correspondant à l'absence de défaut.

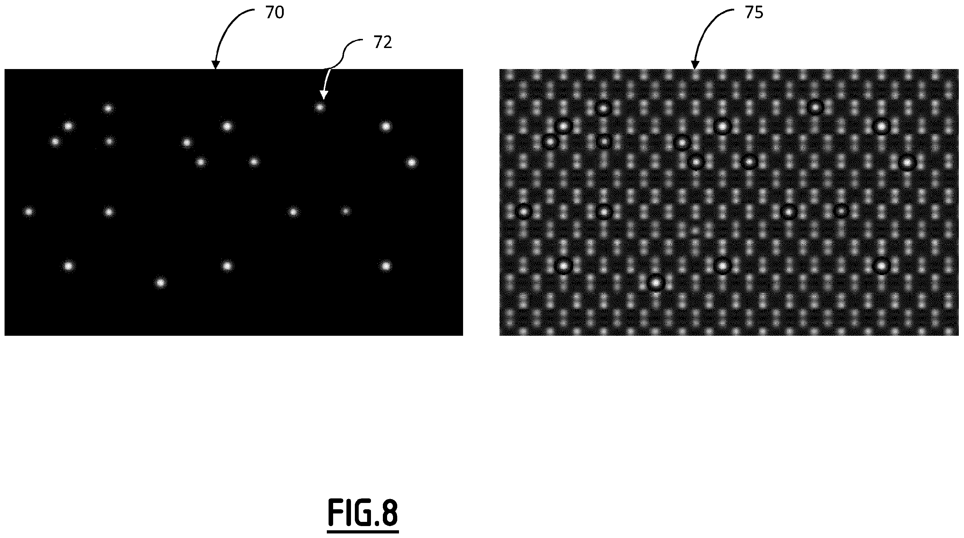

La **figure 8** illustre une cartographie finale 70 des défauts structurels (défauts interstitiels), obtenue par combinaison (également appelée ségrégation) des première et deuxième cartographies obtenues respectivement sans et avec transformation en espace topologique discret, la transformation étant soit une transformation gommante, soit une transformation exacerbante.

Dans un mode de réalisation, la cartographie finale 70 illustrée à la figure 8 est obtenue par intersection entre la première cartographie 45 et la deuxième cartographie 65.

La combinaison est ici effectuée par un traitement booléen, qui présente l'avantage d'être rapide.

Dans un autre mode de réalisation, la première cartographie 45 subit un post-traitement comportant un filtrage de floutage gaussien (de noyau dont la taille est égale au diamètre moyen des gouttes du cristal) suivi d'un seuillage qui ne conserve que les maxima locaux pour éliminer les résidus et ne conserver que les défauts recherchés.

Ensuite une intersection entre la première cartographie et la deuxième cartographie est appliquée, étant donné que dans chacune des cartographies, les points sombres sont des points de fond d'image et les points clairs sont des points représentatifs de défauts.

La cartographie finale 70 comprend une localisation des taches 72 représentatives de défauts structurels (défauts interstitiels), et tous les défauts interstitiels sont ainsi détectés.

L'image 75 illustrée comprend l'image d'entrée 40 sur laquelle est superposée la cartographie finale 70. Les gouttes représentatives de défauts y sont mises en exergue (encerclées).

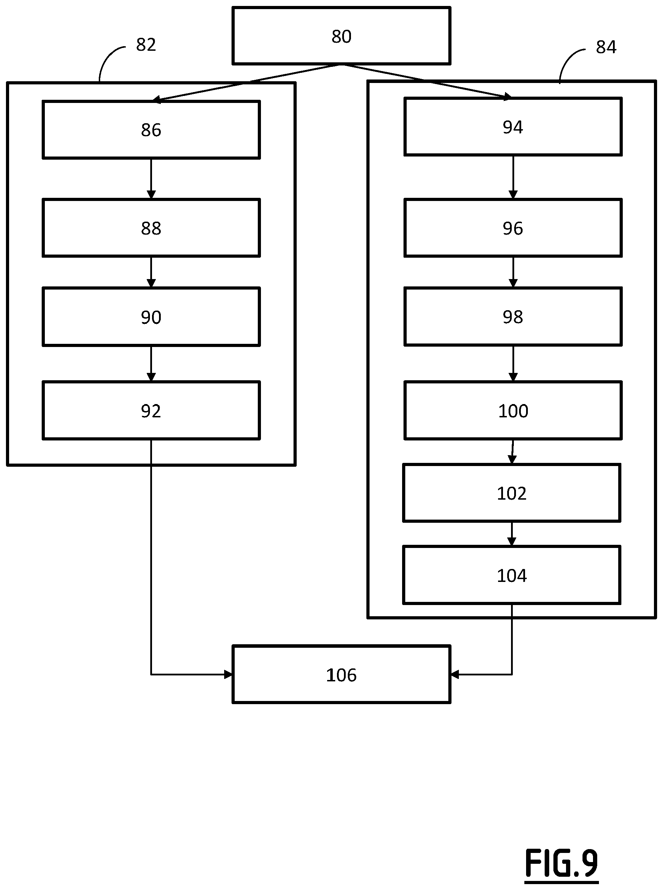

La **figure 9** est un synoptique des principales étapes d'un procédé de traitement d'image pour la localisation de gouttes représentatives de défauts ou irrégularités dans un échantillon observé selon un mode de réalisation.

Le procédé comprend une étape 80 d'obtention d'un pavé de données d'image à traiter, comportant des images de microscopie.

La ou chaque image de microscopie comporte des gouttes se détachant d'un fond homogène, par exemple des gouttes claires sur fond sombre en microscopie HRSTEM-HAADF, ou HRTEM, représentatives de motifs réguliers de la maille et de défauts ou irrégularités dans l'échantillon observé.

Dans un mode de réalisation, de manière optionnelle, le procédé comporte l'application d'un traitement de projection sur un sous-espace de dimension inférieure pour obtenir, à partir du pavé de données d'image, un sous-pavé de données de dimension inférieure à la dimension du pavé de données d'image, chaque point de ce sous-pavé ayant une valeur associée

Par exemple, à partir d'un pavé de données tridimensionnel est obtenu un sous-pavé à deux dimensions, i.e. une image numérique
à 2 dimensions (2D), définie par des points (ou pixels) dans un plan, formant une matrice de pixels de dimensions de L lignes et W colonnes, chaque pixel ayant une valeur numérique associée.

La projection est une étape optionnelle, le traitement d'image décrit ci-après s'appliquant également pour une image à N dimensions.

Dans la suite de la description on parlera de traitement d'image à chaque étape, étant entendu que tous les traitements décrits sont applicables de manière analogue au pavé de données d'images en N dimensions.

Le procédé comprend un premier traitement 82 et un deuxième traitement 84, qui peuvent être appliqués sensiblement en parallèle ou successivement, au pavé de données d'image en N dimensions ou à l'image 2D en deux dimensions.

Le premier traitement 82 comprend une étape 86, optionnelle, de première super-résolution permettant d'obtenir une première image super-résolue à partir de l'image d'entrée.

La première image super-résolue devient l'image d'entrée à traiter par le premier traitement 82.

De préférence, une méthode de super-résolution telle que décrite dans la demande de brevet française déposée sous le numéro FR2013933.

L'image super-résolue est enrichie en tenant compte de la morphologie des gouttes (ou taches) présentes, qui sont préservées, ce procédé d'enrichissement étant particulièrement adapté pour rapprocher la morphologie des gouttes de leur forme idéale prédite par la théorie tout en augmentant le nombre de pixels de l'image.

Le premier traitement comprend également une étape optionnelle 88 de pré-traitement, par exemple un filtrage ou un débruitage de l'image (ou pavé de données d'image d'entrée).

De plus, et de manière optionnelle également, l'étape optionnelle de pré-traitement comporte la mise en oeuvre d'une transformation en espace topologique discret, par exemple une transformation gommante de défauts. Alternativement, le pré-traitement met en oeuvre une transformation exacerbante de défauts.

Ensuite, le premier traitement comprend une étape 90 d'application d'un premier classifieur entraîné par apprentissage machine, appliqué à l'image d'entrée pour obtenir une première cartographie spatiale des points de l'échantillon observé, les points étant regroupés par classes dans cette première cartographie spatiale comme expliqué ci-dessus.

Le premier classifieur permet par exemple de classifier en un nombre prédéterminé de premières classes comprenant au moins une classe représentative d'un fond d'image, une classe représentative d'un type défaut ou irrégularité de l'échantillon observé, et/ou une classe de motifs réguliers (ou motifs de référence) du matériau de l'échantillon observé.

Par exemple la classification est une classification en trois classes, comprend la classe de fond d'image, la classe de motifs réguliers et la classe de défauts ou irrégularités.

Par exemple, la classe de défauts ou irrégularité correspond aux défauts de type atomes interstitiels.

Selon une variante, plusieurs types de défauts structurels sont inspectés, et le premier classifieur permet d'obtenir une classe par type de défaut structurel.

L'apprentissage machine est effectué au préalable, dans une phase d'apprentissage. Il s'agit par exemple d'un apprentissage supervisé, prenant en entrée des données d'apprentissage labellisée individuellement par un homme du métier sur l'image à analyser, ou un apprentissage semi-supervisé plus large formé par des images variées, par exemple des images de synthèse, dont les classes sont préalablement labellisées par un homme du métier. Les paramètres du premier classifieur sont optimisés lors de la phase d'apprentissage.

Par exemple, le premier classifieur est un algorithme de type forêt aléatoire rapide (« fast random forest »).

Une variante consiste à utiliser un algorithme de type « Bayes » (et sous_variantes) ou un apprentissage à base de fonctions, ou de type « lazy » ou basé sur des règles (« rule ») ou à base d'arbres (« trees ») ou toute variante et combinaison de variantes permettant de classifier des formes ou objets dans un espace topologique discret.

La première cartographie correspondant à l'image d'entrée est obtenue à l'issue de l'étape 90. Optionnellement, un post-traitement 92 est appliqué à la première cartographie.

Par exemple, un floutage gaussien suivi d'un seuillage pour aplanir les résidus est appliqué à l'étape de post-traitement 92, permettant d'obtenir une première cartographie améliorée.

Le deuxième traitement 84 comprend une étape 86, optionnelle, de deuxième super-résolution 94 permettant d'obtenir une deuxième image super-résolue à partir de l'image d'entrée.

La deuxième image super-résolue devient l'image d'entrée à traiter par le deuxième traitement 84.

De préférence, une méthode de super-résolution telle que décrite dans la demande de brevet française déposée sous le numéro FR2013933, avec des paramètres adaptés au type de défaut recherché. L'image super-résolue est enrichie en tenant compte de la morphologie des gouttes ou taches présentes, qui sont préservées, ce procédé d'enrichissement étant particulièrement adapté pour préserver les gouttes ou taches de l'image en convergeant vers leur forme idéale prédite par les simulations théoriques.

Le deuxième traitement 84 comprend également une étape optionnelle 96 de pré-traitement, par exemple un filtrage ou un débruitage de l'image d'entrée.

Ensuite, le deuxième traitement 84 comprend une étape 98 d'application d'une transformation en espace topologique discret, permettant d'obtenir une image transformée.

Comme expliqué ci-dessus, la transformation en espace topologique discret appliquée à l'étape 98 est une transformation qui modifie la signature spectrale des défauts ou irrégularités, qui est soit une transformation gommante, soit une transformation exacerbante.

Avantageusement, suite à l'application de la transformation en espace topologique discret, les défauts ou irrégularités sont soit inchangés ou magnifiés (transformation exacerbante), soit réduits, voire effacés (transformation gommante), selon le mode de réalisation.

Dans un mode de réalisation, des transformations gommantes et des transformations exacerbantes sont obtenues, par exemple par vérification de l'effet gommant ou exacerbant des défauts dans le domaine spectral, par analyse du diffractogramme super-résolu d'une ou plusieurs images de synthèse comportant des défauts de signature spectrale connue.

Des exemples de transformations en espace topologique discret ont été décrits ci-dessus.

Par exemple, selon un premier mode de réalisation, la transformation en espace topologique discret est une transformation gommante qui comprend l'application d'une transformée de Fourier, d'un masquage sélectif pour ne garder que les gouttes de diffraction du cristal (i.e. les gouttes représentatives de motifs réguliers du matériau observé) et d'une transformée de Fourier inverse, puis d'une normalisation et d'une binarisation.

Selon un deuxième mode de réalisation, la transformation en espace topologique discret est une transformation exacerbante qui comprend l'application d'une transformation basée sur un minimum de distance euclidienne (e.g. la transformation 8SSEDT) et d'un seuillage.

Plus généralement, toute transformation d'image à base de distances, selon une métrique prédéterminée, euclidienne ou non-euclidienne, est applicable. En particulier, on peut citer la distance de Tchebychev, la distance de Manhattan, la distance de Chamfer.

De plus, un seuillage est appliqué au résultat de la transformation à base de distances, pour obtenir des données binaires.

Selon un troisième mode de réalisation, la transformation exacerbante en espace topologique discret applique un calcul de la plus grande valeur propre du tenseur de structure, selon la méthode décrite dans « Computing Oriented Texture Fields » de A. R. Rao et B. G. Schunck, publié dans CVIP : Graphical Models and Image Processing, vol. 53, no 2, mars 1991, suivi d'un seuillage adaptatif de type Bernsen. Cette transformation est une transformation exacerbante qui transforme les défauts en disques (ou spots) noirs cerclés de blanc.

Selon un quatrième mode de réalisation, une transformation exacerbante de type mettant en oeuvre une approximation polynomiale de type Savitzky-Golay, telle que décrite dans la demande de brevet FR2013932 est appliquée.

Dans ce mode de réalisation, par exemple une transformation HBSG (pour « Half Ball Savitzky-Golay ») avec un lissage d'ordre zéro avec un filtre de convolution de 75x75 pixels est appliquée.

Selon une autre variante, un noyau de convolution de type HBSG de dérivation, par exemple de taille 99 pixels, est appliqué.

Le deuxième traitement 84 comprend ensuite une étape optionnelle 100 de troisième super-résolution appliqué à l'image transformée.

L'étape de superrésolution permet de s'approcher d'une image théorique parfaite tout en augmentant le nombre de pixels.

L'exploration automatisée de transformations ou de combinaisons de transformations permet de trouver les transformations gommantes ou exacerbantes.

Le deuxième traitement 84 comporte en outre l'application 102 d'un deuxième classifieur entraîné par apprentissage machine, appliqué à l'image transformée pour obtenirune deuxième cartographie spatiale des classes de l'échantillon observé, comportant des points, chaque point de la deuxième cartographie étant classifié dans une classe parmi un nombre prédéterminé de deuxièmes classes comprenant au moins une classe représentative d'un fond d'image et une classe représentative de motifs réguliers et/ou une classe représentative d'un défaut ou irrégularité de l'échantillon observé.

Dans un mode de réalisation, cette classification est une classification en trois classes, comprend la classe de fond d'image, la classe des spots réguliers du cristal et la classe de défauts ou irrégularités.

Dans un autre mode de réalisation, cette classification est une classification en deux classes, comprend la classe de fond d'image et la classe de motifs réguliers, lorsqu'il est certain qu'il n'existe aucun défaut dans l'image, par exemple dans le cas d'une image simulée théorique exempte de défaut.

L'apprentissage machine est effectué au préalable, dans une phase d'apprentissage. Il s'agit par exemple d'un apprentissage supervisé, prenant en entrée des régions d'apprentissage labellisées par l'homme du métier sur l'image à traiter ou sur des autres images analogues préalablement labellisées selon les classes recherchées. Les paramètres du deuxième classifieur sont mis au point lors de la phase d'apprentissage pour optimiser la classification.

Par exemple, le deuxième classifieur est un algorithme de type forêt aléatoire rapide (« fast random forest »). Une variante consiste à utiliser un algorithme de type « Bayes » (et sous_variantes) ou un apprentissage à base de fonctions, ou de type « lazy » ou basé sur des règles (« rule ») ou à base d'arbres (« trees ») ou toute variante et combinaison de variantes permettant de classifier des formes ou objets dans un espace topologique discret.

La deuxième cartographie est obtenue à partir de l'image transformée est obtenue à l'issue de l'étape 102.

Optionnellement, un post-traitement 104 est appliqué à la deuxième cartographie.

Par exemple un seuillage adaptatif est appliqué à l'étape 104, permettant d'obtenir une deuxième cartographie binaire.

Enfin, la première cartographie et la deuxième cartographie obtenues sont combinées à l'étape de combinaison 106, pour obtenir une cartographie finale avec localisation de défauts structurels ou irrégularités observés.

Dans un mode de réalisation, la combinaison consiste en une intersection des première et deuxième cartographies, permettant de mettre en exergue les zones contenant des pixels clairs représentatifs de défauts dans les deux cartographies.

Selon une variante, la combinaison consiste à retenir le minimum, ou le maximum, ou la moyenne, sur les première et deuxième cartographies. Pour un nombre de cartographies > 2, il est possible d'utiliser des combinaisons plus élaborées, par exemple la médiane de l'ensemble des cartographies.

Dans un autre mode de réalisation, la combinaison consiste en une soustraction normalisée permettant d'enlever tous les points (ou pixels) correspondant à des motifs réguliers, ne laissant apparents que les pixels correspondant à des défauts ou irrégularités.

Dans un autre mode de réalisation, la combinaison est réalisée par un algorithme utilisant un apprentissage machine, préalablement entraîné à cet effet sur des cartographies d'apprentissage.

Dans un mode de réalisation, lorsqu'une transformation gommante est appliquée dans le premier traitement 82 et une transformation exacerbante est appliquée dans le deuxième traitement 84, l'étape de combinaison met en oeuvre une différence normalisée entre la deuxième cartographie et la première cartographie. La normalisation consiste à obtenir par homothétie la même intensité pour les motifs de référence dans les deux cartographies, afin que la différence aboutisse à une intensité nulle.

Alternativement, lorsqu'une transformation exacerbante est appliquée dans le premier traitement 82 et une transformation gommante est appliquée dans le deuxième traitement 84, l'étape de combinaison met en oeuvre une différence normalisée entre la première cartographie et la deuxième cartographie.

Le procédé de la figure 9 comprend un seul deuxième traitement.

Selon une variante, plusieurs tels deuxièmes traitements sont appliqués, chacun mettant en oeuvre une transformation en espace topologique discret différente. Cela permet d'augmenter la précision et la sélectivité du traitement de localisation des défauts ou irrégularités.

Dans le procédé décrit, chacun des premier et deuxième traitements met en oeuvre un apprentissage supervisé sur des données d'apprentissage. Les données d'apprentissage sont par exemple des données réelles collectées, ou des données artificielles. Par exemple, les données d'apprentissage sont obtenues par simulation de modèles utilisant des équations de la physique du solide permettant de simuler des images, les défauts structurels étant également simulés. Selon une autre variante, les données d'apprentissage sont obtenues par panachage de données simulées et de données expérimentales.

Selon d'autres variantes, l'apprentissage machine est de type semi-supervisé ou non-supervisé (autonome). Une autre variante consiste en un apprentissage machine profond (en anglais « deep learning ») ou toute autre variante d'apprentissage obtenue par intelligence artificielle, de préférence frugale pour améliorer la rapidité des traitements.

Avantageusement, le traitement proposé est flexible et robuste, et permet d'obtenir une cartographie des plus petits défauts tels que les défauts ponctuels éventuellement chargés électriquement.

## Revendications

1. Procédé de traitement d'image pour la localisation de gouttes représentatives de défauts ou irrégularités dans un échantillon, comportant une acquisition d'au moins une image de microscopie formant un pavé de données d'image d'entrée, la ou chaque image dudit pavé étant représentative d'une partie de l'échantillon, le procédé étant **caractérisé en ce qu'**il comporte:
- un premier traitement (82) du pavé de données d'image d'entrée mettant en oeuvre (90) un premier classifieur entraîné par apprentissage machine, appliqué audit pavé de données d'image d'entrée pour obtenir une première cartographie spatiale des points de l'échantillon observé, chaque point de ladite première cartographie étant classifié dans une classe parmi un nombre prédéterminé de premières classes comprenant au moins une classe représentative d'un fond d'image, une classe représentative de motifs réguliers de référence et/ou une classe représentative d'un type de défaut ou irrégularité ;
- un deuxième traitement (84) du pavé de données d'image d'entrée comprenant :
- une transformation (98) du pavé de données d'image d'entrée par une transformation en espace topologique discret, pour obtenir un pavé de données transformé, ladite transformation (98) en espace topologique discret étant une transformation modifiant une signature spectrale des défauts ou irrégularités, ladite transformation en espace topologique discret étant soit une transformation dite gommante, l'application d'une transformation gommante ayant pour effet de réduire ladite signature spectrale des défauts ou irrégularités, soit une transformation dite exacerbante, l'application d'une transformation exacerbante ayant pour effet de magnifier ladite signature spectrale des défauts ou irrégularités,
- une application (102) d'un deuxième classifieur entraîné par apprentissage machine, appliqué au pavé de données transformé pour obtenir une deuxième cartographie spatiale de l'échantillon observé, chaque point de ladite deuxième cartographie étant classifié dans une classe parmi un nombre prédéterminé de deuxièmes classes comprenant au moins une classe représentative d'un fond d'image, une classe représentative de motifs réguliers et/ou une classe représentative d'un type de défaut ou irrégularité ;
- une combinaison (106) des première et deuxième cartographies spatiales pour obtenir une cartographie finale avec localisation de défauts ou irrégularités dans l'échantillon observé.

2. Procédé selon la revendication 1, comportant une projection du pavé de données d'image d'entrée pour obtenir un sous-pavé de dimension inférieure comportant une matrice de pixels, chaque pixel ayant une valeur numérique associée.

3. Procédé selon la revendication 1 ou 2, dans lequel le premier traitement (82) comporte en outre l'application d'un premier traitement de super-résolution (86).

4. Procédé selon l'une des revendications 1 à 3, dans lequel le premier traitement (82) comporte en outre un post-traitement (92) de la première cartographie spatiale.

5. Procédé selon l'une des revendications 1 à 4, dans lequel le deuxième traitement (84) comporte en outre l'application d'un deuxième traitement de super-résolution (94) appliqué au pavé de données d'image d'entrée et/ou un troisième traitement de super-résolution (100) appliqué au pavé de données transformé avant application du deuxième classifieur.

6. Procédé selon l'une des revendications 1 à 5, dans lequel le deuxième traitement (84) comporte en outre l'application d'un post-traitement (104) appliqué à la deuxième cartographie après application (102) du deuxième classifieur.

7. Procédé selon l'une des revendications 1 à 6, dans lequel le premier traitement (82) comporte en outre l'application d'une transformation en espace topologique discret, gommante ou exacerbante, du pavé de données d'entrée, avant l'application (90) du premier classifieur.

8. Procédé selon l'une des revendications 1 à 7, comportant une étape préalable de détermination automatisée d'au moins une transformation gommante et/ou d'au moins une transformation exacerbante, mettant en oeuvre, pour un type de défaut donné, pour un ensemble de transformations à tester, appliquées sur des images théoriques présentant chacune au moins un défaut dudit type de défaut :
- un calcul de diffractogramme superrésolu de l'image théorique et une détermination d'une signature spectrale dudit type de défaut à partir du diffractogramme superrésolu d'image théorique,
- une application d'une transformation à tester sur l'image théorique pour obtenir une image transformée, et calcul d'un diffractogramme superrésolu de l'image transformée,
- une comparaison du diffractogramme superrésolu de l'image théorique et du diffractogramme superrésolu de l'image transformée, pour déterminer si ladite signature spectrale dudit type de défaut est modifiée.

9. Procédé selon l'une des revendications 1 à 8, dans lequel la transformation en espace topologique discret est une transformation gommante comportant des sous-étapes de :
- application d'une transformation de Fourier au pavé de données d'image d'entrée,
- masquage sélectif appliqué au résultat de la transformation de Fourier,
- application d'une transformation de Fourier inverse pour obtenir le pavé de données d'image transformé.

10. Procédé selon la revendication 9, dans lequel le masquage sélectif met en oeuvre un seuillage, consistant à mettre à zéro les valeurs du pavé de données transformé inférieures à une première valeur de seuil, ladite première valeur de seuil étant choisie en fonction d'un pave de données simulé exempt de défaut.

11. Procédé selon l'une des revendications 9 ou 10 dépendant de la revendication 7, dans lequel ladite première cartographie est obtenue après application d'une transformation gommante et ladite deuxième cartographie est obtenue après application d'une transformation exacerbante, ou ladite première cartographie est obtenue après application d'une transformation exacerbante et ladite deuxième cartographie est obtenue après application d'une transformation gommante, et la combinaison met en oeuvre une soustraction entre lesdites première et deuxième cartographies.

12. Procédé selon l'une des revendications 1 à 10, dans lequel la transformation en espace topologique discret du pavé de données d'image d'entrée est une transformation exacerbante comportant des sous-étapes de:
- calcul d'une transformation à base de distances, associant à chaque point du pavé de données transformé une valeur représentative d'une plus petite distance, selon une métrique prédéterminée, entre ledit point et un point appartenant à une goutte,
- seuillage du résultat de ladite transformation à base de distances pour obtenir un pavé binaire de données transformé.

13. Procédé selon l'une quelconque des revendications 1 à 12, dans lequel la combinaison(106) met en oeuvre une intersection des première et deuxième cartographies.

14. Procédé selon l'une quelconque des revendications 1 à 12, dans lequel la combinaison (106) met en oeuvre un apprentissage machine.

15. Procédé selon l'une quelconque des revendications 1 à 13, mis en oeuvre par un processeur d'un dispositif de calcul.

16. Programme d'ordinateur comportant des instructions logicielles qui, lorsqu'elles sont exécutées par un dispositif électronique programmable, mettent en oeuvre un procédé de traitement d'image conforme aux revendications 1 à 15.

17. Dispositif de traitement d'image pour la localisation de gouttes représentatives de défauts ou irrégularités dans un échantillon, comportant une acquisition d'au moins une image de microscopie formant un pavé de données d'image d'entrée, la ou chaque image dudit pavé étant représentative d'une partie de l'échantillon, le dispositif étant **caractérisé en ce qu'**il comporte un processeur configuré pour exécuter:
- un module (20) de premier traitement du pavé de données d'image d'entrée mettant en oeuvre un premier classifieur entraîné par apprentissage machine, appliqué audit pavé de données d'image d'entrée pour obtenir une première cartographie spatiale des points de l'échantillon observé, chaque point de ladite première cartographie étant classifié dans une classe parmi un nombre prédéterminé de premières classes comprenant au moins une classe représentative d'un fond d'image, une classe représentative de motifs réguliers de référence et/ou une classe représentative d'un type de défaut ou irrégularité ;
- un module (22) deuxième traitement du pavé de données d'image d'entrée comprenant :
- un sous-module (30) de transformation du pavé de données d'image d'entrée par une transformation en espace topologique discret, pour obtenir un pavé de données transformé, ladite transformation en espace topologique discret étant une transformation modifiant une signature spectrale des défauts ou irrégularités, ladite transformation en espace topologique discret étant soit une transformation dite gommante, l'application d'une transformation gommante ayant pour effet de réduire ladite signature spectrale des défauts ou irrégularités, soit une transformation dite exacerbante, l'application d'une transformation exacerbante ayant pour effet de magnifier ladite signature spectrale des défauts ou irrégularités,
- un sous-module (32) d'application d'un deuxième classifieur entraîné par apprentissage machine, appliqué au pavé de données transformé pour obtenir une deuxième cartographie spatiale de l'échantillon observé, chaque point de ladite deuxième cartographie étant classifié dans une classe parmi un nombre prédéterminé de deuxièmes classes comprenant au moins une classe représentative d'un fond d'image, une classe représentative de motifs réguliers et/ou une classe représentative d'un type de défaut ou irrégularité ;
- un module (24) de combinaison des première et deuxième cartographies spatiales pour obtenir une cartographie finale avec localisation de défauts ou irrégularités dans l'échantillon observé.
